# EUROPEAN PATENT APPLICATION

(11) **EP 3 441 493 A1**
(43) Date of publication of application: **13.02.2019**
(21) Application number: 17185357.5
(22) Date of filing: 08.08.2017
(51) Int. Cl.: C22C 38/00, B22F 7/08, B23K 26/34, C22C 33/02, C22C 38/20, C22C 38/22, C23C 24/08, C23C 24/10, C23C 30/00, F01D 5/28

(54) **ALLOY AND COMPONENT HAVING A LAYER THEREOF**

(71) Applicant: Siemens Aktiengesellschaft, 80333 München (DE)
(72) Inventor: Mathai, Manu, Lincoln, LN5 7FD (GB)
(74) Representative: Maier, Daniel Oliver

(57) **Abstract**

An iron-based alloy is described. Also described is a component 10 having a surface layer 12 of an iron-based alloy, a method of providing a surface layer of an iron-based alloy on a component, an apparatus arranged to provide a surface layer of an iron-based alloy on a component and use of a surface layer of an iron-based alloy to improve corrosion pitting resistance and/or water droplet erosion (WDE) thereof.

## Description

### Field

The present invention relates generally to iron-based alloys, for example iron-based alloys having improved pitting corrosion resistance and/or improved water droplet erosion (WDE) resistance, and to components, for example gas turbine components, having surface layers of such alloys.

### Background to the invention

Generally, pitting corrosion (also known as pitting) is a type of localized corrosion of a metal that results in formation of pits (small holes) in the metal. A cause of pitting corrosion is depassivation of a typically small surface area of the metal, which becomes anodic while the remainder of the surface becomes cathodic, thereby resulting localised galvanic corrosion. This corrosion penetrates the surface of metal. Pitting corrosion typically occurs in alloys, for example stainless steels, nickel alloys and aluminium alloys, that are normally protected by passivation surface layers, for example oxide layers, in environments that contain aggressive species, for example chloride ions, are at elevated temperatures, have increased concentrations of oxidants and/or are acidic.

Generally, gas turbine components, for example rotating and stationary compressor blades (also known as aerofoils or airfoils), require at least a combination of high strength, toughness and fatigue resistance to withstand static and/or dynamic stresses, for example centripetal stresses and/or stress cycling, at operational temperatures. Stainless steels, for example ASTM P91, ASTM P92, GTD 450, SAE 400 series, SAE 600 series such as SAE type 630 (also known as 17-4 or 17-4PH; also known as UNS 17400), may meet these requirements. However, such components may also be susceptible to pitting corrosion, which may initiate fatigue cracking during high cycle fatigue, for example. Growth of such fatigue cracks may result in catastrophic failure of the components. In addition, such components may be susceptible to water droplet erosion (WDE), caused by impingement of liquid water droplets sprayed on the components to provide cooling, for example. WDE may also contribute towards fatigue of the components and ultimately failure. Leading edges of compressor blades may be particularly susceptible to pitting corrosion and/or WDE. Conventional approaches to improving pitting corrosion resistance and/or WDE include providing ceramic coatings, modifying component design to reduce stresses and developing new alloys. However, such ceramic coatings may be susceptible to delamination. Modifying the component design to reduce stresses does not affect susceptibility to pitting corrosion and/or WDE. New alloy development may be costly, typically requiring new manufacturing processes and/or new qualification of components formed therefrom.

Hence, there is a need to improve pitting corrosion and/or WDE resistance, for example, of gas turbine components.

### Summary of the Invention

It is one aim of the present invention, amongst others, to provide an iron-based alloy having improved pitting corrosion resistance and/or improved water droplet erosion (WDE) resistance which at least partially obviates or mitigates at least some of the disadvantages of the prior art, whether identified herein or elsewhere. For instance, it is an aim of embodiments of the invention to provide a component having a surface layer having improved pitting corrosion resistance and/or improved water droplet erosion (WDE) resistance.

According to a first aspect, there is provided an iron-based alloy comprising tungsten and nitrogen in the following amounts by weight % of the iron-based alloy:
- 1% to 6% tungsten
- 1% to 2% nitrogen.

According to a second aspect, there is provided a component comprising a main body having a first iron-based alloy composition and a surface layer having a second iron-based alloy composition, wherein the surface layer is arranged on a surface region of the main body, wherein the second iron-based alloy composition is enriched, compared with the first iron-based alloy composition, with tungsten and nitrogen.

According to a third aspect, there is provided method of providing a surface layer of an iron-based alloy on a component, the method comprising the steps of:
a) depositing a metal nitride powder and a metal powder on at least a part of a surface of the component, wherein the metal powder comprises one or more of chromium, molybdenum, tungsten, copper and iron;
b) melting the metal powder and the metal nitride powder deposited on the part of surface of the component; and
c) controlling cooling of the surface layer.

According to a fourth aspect, there is provided an apparatus for providing a surface layer of an iron-based alloy onto a component, the apparatus comprising:
depositing means for depositing a metal nitride powder and a metal powder on at least a part of a surface of the component;
melting means for melting the metal nitride powder and the metal powder deposited on the part of the surface of the component; and
controlled cooling means for controlling cooling of the surface layer.

According to a fifth aspect, there is provided a method of improving pitting corrosion resistance and/or water droplet erosion (WDE) resistance of an iron-based alloy, the method comprising increasing the content of tungsten and nitrogen, in the iron-based alloy to the following amounts by weight % of the iron-based alloy:
- 1% to 6% tungsten
- 1% to 2% nitrogen.

According to a sixth aspect, there is provided use of an iron-based alloy according to the first aspect on a surface of a component to improve corrosion pitting resistance and/or water droplet erosion (WDE) resistance thereof.

### Detailed Description of the Invention

According to the present invention there is provided an iron-based alloy, as set forth in the appended claims. Also provided is a component comprising a surface layer, a method of providing a surface layer on a component, an apparatus for providing a surface, a method of improving pitting corrosion resistance and/or water droplet erosion (WDE) resistance of an iron-based alloy and use an iron-based alloy on a surface of a component to improve corrosion pitting resistance and/or water droplet erosion (WDE) resistance thereof. Other features of the invention will be apparent from the dependent claims, and the description that follows.

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention, such as colourants, and the like.

The term "consisting of" or "consists of" means including the components specified but excluding other components.

Whenever appropriate, depending upon the context, the use of the term "comprises" or "comprising" may also be taken to include the meaning "consists essentially of" or "consisting essentially of", and also may also be taken to include the meaning "consists of" or "consisting of".

The optional features set out herein may be used either individually or in combination with each other where appropriate and particularly in the combinations as set out in the accompanying claims. The optional features for each aspect or exemplary embodiment of the invention, as set out herein are also applicable to all other aspects or exemplary embodiments of the invention, where appropriate. In other words, the skilled person reading this specification should consider the optional features for each aspect or exemplary embodiment of the invention as interchangeable and combinable between different aspects and exemplary embodiments.

According to the first aspect, there is provided an iron-based alloy comprising tungsten and nitrogen in the following amounts by weight % of the iron-based alloy:
- 1% to 6% tungsten
- 1% to 2% nitrogen.

By combining alloying additions of tungsten and nitrogen in the iron-based alloy, improved pitting corrosion resistance and/or improved water droplet erosion (WDE) resistance is provided.

Tungsten is effective in improving pitting corrosion resistance and/or WDE. Conventional iron-based alloys for gas turbine components typically comprise no tungsten or other third row transition metals since for gas turbine components, alloys having lower densities are preferred so as to reduce vibrational issues, for example due to modal or natural frequencies of the components. However, by combining the alloying additions as described above, improved pitting corrosion resistance and/or improved water droplet erosion (WDE) resistance is provided.

In one example, the iron-based alloy comprises at least 1.5%, at least 2%, at least 2.5%, at least 3%, at least 3.5%, at least 4% or at least 4.5%, at least 5% or at least 5.5% tungsten by weight % of the iron-based alloy. In one example, the iron-based alloy comprises at most 1.5%, at most 2%, at most 2.5%, at most 3%, at most 3.5%, at most 4% or at most 4.5%, at most 5% or at most 5.5% tungsten by weight % of the iron-based alloy. In one example, the iron-based alloy comprises 2% to 4% tungsten by weight % of the iron-based alloy.

Nitrogen is effective in improving pitting corrosion resistance and/or WDE. Nitrogen also contributes to mechanical strengthening of the alloy. Particularly, nitrogen may contribute to improving pitting corrosion resistance and/or WDE and/or mechanical strength if present in solid solution and/or in very fine and coherent nitrides. High nitrogen martensitic stainless steels may show improved resistance to localized corrosion, including pitting corrosion, crevice corrosion and/or intergranular corrosion) over carbon containing equivalents. In addition, since nitrogen may have an effect of suppressing generation of delta ferrite, adding nitrogen in place of nickel is more cost-effective. Conventional iron-based alloys for gas turbine components typically comprise lower amounts of nitrogen.

In one example, the iron-based alloy comprises at least 1.25%, at least 1.5% or at least 1.75% nitrogen by weight % of the iron-based alloy. In one example, the iron-based alloy comprises at most 1.25%, at most 1.5% or at most 1.75% nitrogen by weight % of the iron-based alloy.

In one example, the iron-based alloy comprises any one or more of chromium, molybdenum and copper in the following amounts by weight % of the iron-based alloy:
- 15% to 20% chromium
- 3% to 8% molybdenum
- 2% to 6% copper.

Chromium may be present in an amount sufficient to form a passivation layer (also known as a passive film) comprising chromium oxide on a surface of the alloy, thereby improving pitting corrosion resistance and/or WDE. The iron-based alloy may comprise 15% to 20% chromium by weight % of the alloy. Conventional iron-based alloys for gas turbine components typically comprise lower amounts of chromium so as to avoid formation of delta ferrite in those conventional alloys, which may be associated with deteriorated pitting corrosion resistance and/or WDE and/or reduced workability of these conventional alloys. In addition, the lower amounts of chromium in these conventional alloys may be also associated with formation of Cr-rich intermetallic phases, thereby depleting the matrix of these conventional alloys of chromium, which may be associated with deteriorated pitting corrosion resistance and/or WDE. The Cr-rich intermetallic phases may be associated with reduced toughness. However, by combining the alloying additions as described above, improved pitting corrosion resistance and/or improved water droplet erosion (WDE) resistance is provided.

In one example, the iron-based alloy comprises at least 15.5%, at least 16%, at least 16.5%, at least 17%, at least 17.5%, at least 18% or at least 18.5%, at least 19% or at least 19.5% chromium by weight % of the iron-based alloy. In one example, the iron-based alloy comprises at most 15.5%, at most 16%, at most 16.5%, at most 17%, at most 17.5%, at most 18% or at most 18.5%, at most 19% or at most 19.5% chromium by weight % of the iron-based alloy.

Molybdenum may be present in an amount sufficient to stabilize the passivation layer and/or enhance repassivation of the alloy, thereby improving pitting corrosion resistance and/or WDE. Molybdenum has a larger effect than chromium on the corrosion pitting resistance and/or WDE of the alloy. Conventional iron-based alloys for gas turbine components typically comprise lower amounts of molybdenum, which may be also associated with formation of Mo-rich intermetallic phases, thereby depleting the matrix of these conventional alloys of molybdenum, which may be associated with deteriorated pitting corrosion resistance and/or WDE. The Mo-rich intermetallic phases may be associated with reduced toughness. However, by combining the alloying additions as described above, improved pitting corrosion resistance and/or improved water droplet erosion (WDE) resistance is provided.

Furthermore, in conventional martensitic iron-based alloys comprising chromium and molybdenum for gas turbine components, secondary hardening effects at high tempering temperatures also results in precipitation of Cr-rich and/or Mo-rich intermetallic phases, including laves phase (Fe₂Mo), Fe₇Mo₆, FeMo, the sigma phase (Fe-Cr-Mo), and a complex BCC chi phase (Fe-Cr-Mo). The intermetallic phases may be associated with reduced toughness.

In one example, the iron-based alloy comprises at least 3.5%, at least 4%, at least 4.5%, at least 5%, at least 5.5%, at least 6% or at least 6.5%, at least 7% or at least 7.5% molybdenum by weight % of the iron-based alloy. In one example, the iron-based alloy comprises at most 3.5%, at most 4%, at most 4.5%, at most 5%, at most 5.5%, at most 6% or at most 6.5%, at most 7% or at most 7.5% molybdenum by weight % of the iron-based alloy. In one example, the iron-based alloy comprises 5% to 6% molybdenum by weight % of the iron-based alloy.

Copper may be present in an amount sufficient to improve pitting corrosion resistance and/or WDE.

In one example, the iron-based alloy comprises at least 2.5%, at least 3%, at least 3.5%, at least 4% or at least 4.5%, at least 5% or at least 5.5% copper by weight % of the iron-based alloy. In one example, the iron-based alloy comprises at most 2.5%, at most 3%, at most 3.5%, at most 4% or at most 4.5%, at most 5% or at most 5.5% copper by weight % of the iron-based alloy. In one example, the iron-based alloy comprises 3% to 4% copper by weight % of the iron-based alloy.

Optionally, the iron-based alloy comprises by weight % of the iron-based alloy:
- 10% to 15% nickel
- at most 1% carbon, preferably at least 0.001%
- at most 2% manganese, preferably at least 0.01%, at most 1%
- at most 2% silicon, preferably at least 0.01%, at most 1%
- at most 0.040% phosphorus
- at most 0.030% sulphur
- at most 2.5 ppm hydrogen
- at most 0.010% aluminium
- at most 20 ppm oxygen
- the remainder consisting of iron and unavoidable impurities.

In one example, the iron-based alloy consists of by weight % of the iron-based alloy:
- 15% to 20% chromium
- 3% to 8% molybdenum
- 1% to 6% tungsten
- 2% to 6% copper
- 1 % to 2% nitrogen
optionally:
- 10% to 15% nickel
- at most 1% carbon, preferably at least 0.001%
- at most 2% manganese, preferably at least 0.01%, at most 1%
- at most 2% silicon, preferably at least 0.01%, at most 1%
- at most 0.040% phosphorus
- at most 0.030% sulphur
- at most 2.5 ppm hydrogen
- at most 0.010% aluminium
- at most 20 ppm oxygen
- the remainder consisting of iron and unavoidable impurities.

Nickel may be present in an amount sufficient to stabilize austenite. Nickel is austenite stabilizer and an effective solid solution strengthener.

In one example, the iron-based alloy comprises at least 10.5%, at least 11%, at least 11.5%, at least 12%, at least 12.5%, at least 13% or at least 13.5%, at least 14% or at least 14.5% nickel by weight % of the iron-based alloy. In one example, the iron-based alloy comprises at most 10.5%, at most 11%, at most 11.5%, at most 12%, at most 12.5%, at most 13% or at most 13.5%, at most 14%, at most 14.5% nickel or at most 15% by weight % of the iron-based alloy. In one example, the iron-based alloy comprises 10% to 15% nickel by weight % of the iron-based alloy.

Carbon may be present in an amount sufficient to provide a predetermined hardness and/or a predetermined tensile strength. The amount of C may also be selected to avoid the formation of coarse M₂₃C₆ carbides. These carbides preferentially nucleate at grain boundaries and cause reduced toughness. Chromium carbides, molybdenum carbides, tungsten carbides and/or mixed chromium, molybdenum and/or tungsten carbides may also deplete the matrix surrounding the carbide of chromium, molybdenum and/or tungsten respectively, leading to a reduction of pitting corrosion resistance. The amount of carbon should be limited to enhance pitting corrosion resistance. In most cases, the amount of carbon required is to be maintained very low.

In one example, the iron-based alloy comprises at least 0.001%, at least 0.01%, at least 0.1%, at least 0.2%, at least 0.3%, at least 0.4%, at least 0.5%, at least 0.6%, at least 0.7%, at least 0.8% or at least 0.9% carbon by weight % of the iron-based alloy. In one example, the iron-based alloy comprises at most 0.01%, at most 0.1%, at most 0.2%, at most 0.3%, at most 0.4%, at most 0.5%, at most 0.6%, at most 0.7%, at most 0.8%, at most 0.9% or at most 1 % carbon by weight % of the iron-based alloy.

Manganese is an austenite stabilizer and an effective solid solution strengthener.

In one example, the iron-based alloy comprises at least 0.01%, at least 0.1%, at least 0.2%, at least 0.4%, at least 0.6%, at least 0.8%, at least 1.0%, at least 1.2%, at least 1.4%, at least 1.6%, at least 1.8% or at least 2% manganese by weight % of the iron-based alloy. In one example, the iron-based alloy comprises at most 0.01%, at most 0.1 %, at most 0.2%, at most 0.4%, at most 0.6%, at most 0.8%, at most 1.0%, at most 1.2%, at most 1.4%, at most 1.6%, at most 1.8% or at most 2% manganese by weight % of the iron-based alloy.

Silicon is a ferrite stabilizer and an effective solid solution strengthener.

In one example, the iron-based alloy comprises at least 0.01%, at least 0.1%, at least 0.2%, at least 0.4%, at least 0.6%, at least 0.8%, at least 1.0%, at least 1.2%, at least 1.4%, at least 1.6%, at least 1.8% or at least 2% silicon by weight % of the iron-based alloy. In one example, the iron-based alloy comprises at most 0.01%, at most 0.1%, at most 0.2%, at most 0.4%, at most 0.6%, at most 0.8%, at most 1.0%, at most 1.2%, at most 1.4%, at most 1.6%, at most 1.8% or at most 2% silicon by weight % of the iron-based alloy.

Phosphorus, sulphur, hydrogen, aluminium and/or oxygen may have deleterious effects on the alloy and hence amounts thereof may be controlled. In one example, the iron-based alloy comprises at most at most 0.040% phosphorus, at most 0.030% sulphur, at most 2.5 ppm hydrogen, at most 0.010% aluminium and/or at most 20 ppm oxygen by weight % of the iron-based alloy.

Other optional alloying additions include vanadium, titanium, niobium, boron, magnesium and calcium. These alloying additions may be individually present in the iron-based alloy in amounts of at least 0.001%, at least 0.01%, at least 0.1%, at least 0.2%, at least 0.3%, at least 0.4%, at least 0.5%, at least 0.6%, at least 0.7%, at least 0.8%, at least 0.9% or at least 1.0 % by weight % of the iron-based alloy. These alloying additions may be individually present in the iron-based alloy in amounts of at most 0.01%, at most 0.1%, at most 0.2%, at most 0.3%, at most 0.4%, at most 0.5%, at most 0.6%, at most 0.7%, at most 0.8%, at most 0.9% or at most 1% by weight % of the iron-based alloy.

In one example, the iron-based alloy has a Brinell hardness of at least 180 HB . In one example, the iron-based alloy has a hardness of at most 350 HB. The Brinell hardness may be determined, for example, according to ASTM E10-14: Standard method for Brinell hardness of metallic materials and/or EN ISO 6506:2005 for example EN ISO 6506-1:2005: Metallic materials - Brinell hardness test - Part 1: test method. In one example, the iron-based alloy has a yield strength of at least 350 MPa. In one example, the iron-based alloy has a yield strength of at most 720 MPa. In one example, the iron-based alloy has an ultimate tensile strength of at least 600 MPa. In one example, the iron-based alloy has an ultimate tensile strength of at most 950 MPa. In this way, resistance to stress corrosion cracking of the iron-based alloy may be improved. The iron-based alloy may be heat treated to provide a desired hardness, yield strength and/or ultimate tensile strength.

According to the second aspect, there is provided a component comprising a main body having a first iron-based alloy composition and a surface layer having a second iron-based alloy composition, wherein the surface layer is arranged on a surface region of the main body, wherein the second iron-based alloy composition is enriched, compared with the first iron-based alloy composition, with tungsten and nitrogen.

In this way, pitting corrosion resistance and/or improved WDE resistance of the component is improved. Particularly, since the surface layer is of the second iron-based alloy composition, enriched, compared with the first iron-based alloy composition, with tungsten and nitrogen, improved pitting corrosion resistance and/or improved WDE resistance is provided. Since this surface layer is exposed to the environment and/or water droplets, the surface layer of the second iron-based alloy composition effectively protects the main body having the first iron-based alloy composition thereunder.

In one example, the surface layer having the second iron-based alloy composition has a thickness of at least 0.01 mm, at least 0.1 mm, at least 0.2 mm, at least 0.4 mm, at least 0.6 mm, at least 0.8 mm, at least 1.0 mm, at least 1.2 mm, at least 1.4 mm, at least 1.5 mm, at least 1.6 mm, at least 1.8 mm or at least 2 mm. In one example, the surface layer having the second iron-based alloy composition has a thickness of at most 0.01 mm, at most 0.1 mm, at most 0.2 mm, at most 0.4 mm, at most 0.6 mm, at most 0.8 mm, at most 1.0 mm, at most 1.2 mm, at most 1.4 mm, at most 1.5 mm, at most 1.6 mm, at most 1.8 mm or at most 2 mm.

In one example, the surface layer having the second iron-based alloy composition is arranged on at least 0.5%, at least 1 %, at least 2 %, at least 3 %, at least 4 %, at least 5 %, at least 7.5 %, at least 10 %, at least 15 %, at least 20 %, at least 25 %, at least 30 %, or at least 40 % of the surface region of the main body. In one example, the surface layer having the second iron-based alloy composition is arranged on at most 1 %, at most 2 %, at most 3 %, at most 4 %, at most 5 %, at most 7.5 %, at most 10 %, at most 15 %, at most 20 %, at most 25 %, at most 30 %, at most 40 % or at most 50 % of the surface region of the main body.

In one example, the second iron-based alloy comprises tungsten and nitrogen in the following amounts by weight % of the second iron-based alloy:
- 1% to 6% tungsten
- 1% to 2% nitrogen.

In one example, the second iron-based alloy comprises any one or more of chromium, molybdenum and copper in the following amounts by weight % of the second iron-based alloy:
- 15% to 20% chromium
- 3% to 8% molybdenum
- 2% to 6% copper.

In one example, the second iron-based alloy is an iron-based alloy according to the first aspect.

In one example, the component is a gas turbine component, for example a rotating or stationary compressor blade.

In one example, the component is a compressor blade and the surface layer is arranged on at least a part of a leading edge of the compressor blade.

By providing the surface layer of the second iron-based alloy according to the first aspect on the surface of the component, the pitting corrosion resistance and/or WDE resistance of the component is improved, thereby improving a lifetime of the compressor blade.

In one example, the first iron-based alloy is a stainless steel, for example ASTM P91, ASTM P92, GTD 450, SAE 400 series, SAE 600 series such as SAE type 630 (also known as 17-4 or 17-4PH; also known as UNS 17400).

As described above, leading edges of compressor blades may be particularly susceptible to pitting corrosion and/or WDE. Since the surface layer having the second iron-based alloy composition is arranged on at least the part of the leading edge of the compressor blade, pitting corrosion resistance and/or WDE resistance is improved, thereby improving a lifetime of the compressor blade.

Further, since the surface layer having the second iron-based alloy composition is arranged on at least the part of the leading edge of the compressor blade, for example only on the leading edge of the compressor blade, a density of the compressor blade is not significantly increased and hence potential vibrational issues are avoided. Additionally, a cost of the compressor blade may be reduced. Furthermore, since the composition of the first iron-based alloy from which the compressor blade is formed is unchanged, new manufacturing processes and/or new qualification may not be required for the compressor blade. Additionally, the surface layer of the second iron-based alloy may be provided on existing compressor blades, such as part of a refurbishment, thereby extending lifetimes of the compressor blades.

According to the third aspect, there is provided method of providing a surface layer of an iron-based alloy on a component, the method comprising the steps of:
a) depositing a metal nitride powder and a metal powder on at least a part of a surface of the component, wherein the metal powder comprises one or more of chromium, molybdenum, tungsten, copper and iron;
b) melting the metal powder and the metal nitride powder deposited on the part of surface of the component; and
c) controlling cooling of the surface layer.

The iron-based alloy may be according to the first aspect.

In one example, the depositing the metal nitride powder and the metal powder on at least a part of a surface of the component are implemented separately. For example, the depositing the metal nitride powder may be implemented first and the depositing the metal powder may be implemented second. In this way, an amount of the metal nitride powder deposited and/or a position on the component at which the metal nitride powder is deposited maybe controlled.

In one example, the controlling cooling of the surface layer comprises heating at least a part of the solidified surface layer, thereby limiting a rate of cooling of the part of the solidified surface layer.

In one example, the metal nitride powder includes at least one of chromium nitride, tungsten nitride, aluminium nitride, silicon nitride, titanium nitride and boron nitride. In one example, the metal nitride powder includes at least one of chromium nitride powder, tungsten nitride powder, aluminium nitride powder, silicon nitride powder, titanium nitride powder and boron nitride powder.

In one example, the depositing the metal powder comprises depositing an unalloyed powder and/or a plurality of unalloyed metal powders, whereby a composition of the alloy is controllable.

An unalloyed powder may be a powder of an unalloyed metal. It should be understood that unalloyed metals refer to metals having relatively high purities, for example at least 95 wt.%, at least 97 wt.%, at least 99 wt.%, at least 99.5 wt.%, at least 99.9 wt.%, at least 99.95 wt.%, at least 99.99 wt.%, at least 99.995 wt.% or at least 99.999 wt.% purity.

In one example, the depositing the metal powder comprises depositing an alloyed powder and/or a plurality of alloyed metal powders, whereby a composition of the alloy is controllable, for example according to alloying of the alloyed powder(s). For example, minor alloying additions such as carbon, boron, silicon, titanium, vanadium, niobium, calcium, and/or magnesium may be included as alloying additions in iron-based metal powder. For example, iron powder is typically not pure and does not include 100% iron. In a typical iron-based powder, there may be other elements present for example 99.5 wt.% iron, 0.03% wt.% carbon, low contents of sulphur and phosphorous, etc. (in the range of 0.01 wt.%).

In one example, the component is a compressor blade formed from another iron-based alloy and wherein the surface layer is provided on at least a part of a leading edge of the compressor blade.

In one example, the method comprises providing a concavity in the surface of the component and wherein the metal nitride powder and the metal powder are deposited in the concavity.

In this way, deposited powders and/or molten metal may be retained in the concavity, for example.

For example, the concavity may be machined as a groove in a leading of a compressor blade.

In one example, the method comprises cleaning at least the part of the surface of the component of the component before depositing the metal nitride powder and a metal powder thereon. In this way, contamination may be reduced. Cleaning may be performed mechanically and/or chemically, for example.

According to the fourth aspect, there is provided an apparatus for providing a surface layer of an iron-based alloy onto a component, the apparatus comprising:
depositing means for depositing a metal nitride powder and a metal powder on at least a part of a surface of the component;
melting means for melting the metal nitride powder and the metal powder deposited on the part of the surface of the component; and
controlled cooling means for controlling cooling of the surface layer.

In this way, the surface layer of the iron-based alloy may be provided on the part of the surface of the component in which melting and cladding are implemented together, thereby reducing a cost and/or complexity while improving control of the properties of the surface layer, for example, adhesion of the surface layer to the component and/or mechanical properties of the surface layer, such as tensile strength. Furthermore, since tungsten is included in the alloy forming the surface layer, a density of the component is not increased significantly and hence vibrational issues, for example due to modal or natural frequencies of the components, are avoided. However, by combining the alloying additions as described above, improved pitting corrosion resistance and/or improved water droplet erosion (WDE) resistance is provided.

By melting the metal powder and the metal nitride powder deposited on the part of surface of the component, these powders are fused together and/or to the component, thereby providing an adherent surface layer of the alloy on the component. The melting means may be arranged to melt the part of surface of the component, such that fusing of the powders to the part of surface of the component is improved. Furthermore, in a liquid state upon melting, mixing of the melt of the powders and component may be improved. In this way, adhesion, cohesion, structural homogeneity, coherence and/or compatibility of the surface layer of the alloy and the component may be improved.

Furthermore, by controlling cooling of the surface layer, cooling rates of the alloy may be controlled, thereby avoiding formation of hard phases such as martensite and/or tempering such hard phases, so as to reduce a hardness and hence tensile strength of the surface layer. In this way, stress corrosion cracking resistance of the surface layer is improved.

The iron-based alloy may be according to the first aspect.

The metal nitride powder and/or metal powder may comprise solid powders and/or may include discrete and/or agglomerated powders. The metal nitride powder and/or metal powder may be provide as slurries, pastes and/or dry powders.

Generally, the metal nitride powder and/or metal powder may comprise any materials amenable to fusion by melting. The metal powder may comprise an unalloyed metal powder and/or an iron-based alloy metal powder.

Generally, the metal powder may comprise any metal from which powders may be produced by atomisation. These powders may be produced by atomisation, such as gas atomisation or water atomisation, or other processes known in the art. These first powders may have regular, such as spherical, shapes and/or irregular, such as spheroidal, flake or granular, shapes. These powders may have a size of at most 200 µm, at most 150 µm, at most 100 µm, at most 75 µm, at most 50 µm, at most 25 µm, at most 15 µm, at most 10 µm, at most 5 µm, or at most 1 µm. These powders may have a size of at least 150 µm, at least 100 µm, at least 75 µm, at least 50 µm, at least 25 µm, at least 15 µm, at least 10 µm, at least 5 µm, or at least 1 µm. Preferably, these powders have a size in a range 10 µm to 100 µm. More preferably, these powders have a size in a range 10 µm to 50 µm.

The metal nitride powder and/or the metal powder may comprise an additive, an iron-based alloying addition, a flux, a binder and/or a coating.

The depositing means for depositing the metal nitride powder and the metal powder on at least the part of the surface of the component may comprise a depositing head, arranged to deposit the metal nitride powder and the metal powder on the component. Other depositing means may be known in the art. A plurality of such depositing heads may be provided, thereby providing for depositing of a plurality of different powders separately and/or individually. For example, different metals powders such as different alloyed and/or unalloyed metal powders may be deposited separately and/or individually and/or different metal nitride powders may be deposited separately and/or individually.

The depositing head may comprise at least one of a powder feeder, a powder mixer, a powder depositor and a powder nozzle. A quantity of the metal nitride powder and the metal powder may be stored, for example separately, in the material feeder. The material feeder may be, for example, a screw feeder, as may be used for powder materials. Additionally and/or alternatively, the material feeder may comprise a hopper, arranged to receive the first material. A plurality of such material feeders may be provided, thereby providing for depositing of a plurality of different powders.

The powder mixer may comprise a blender, arranged to blend a plurality of different powders received from the plurality of material feeders, thereby providing a blended first powder. In this way, a functionally graded alloy may be provided, in which a blend of the powders is different at different parts of the surface layer on the component. The powders or the blended first powders may be provided to the material depositor.

The powder depositor may comprise, for example, an ultrasonic dispenser. Ultrasonic dispensers are vibration-based powder depositors, configured to dispense powders due to ultrasonic vibration. Vibration-based depositors may be particularly suitable for selectively depositing powder. Such an ultrasonic dispenser may comprise a piezoelectric transducer coupled via a coupling member to the deposition nozzle. The ultrasonic dispenser may further comprise an ultrasonic frequency generator coupled to the piezoelectric transducer. By controlling vibration of the ultrasonic dispenser, a rate of dispensing of the powder may be controlled. Other powder depositors may be known in the art.

The powder nozzle may comprise an orifice through which powder is deposited. The deposition nozzle may provide a passageway for the powder from the material depositor.

The depositing means may be arranged to be repositioned in use. In this way, the depositing means may be arranged at, for example, a distance from and/or an angle to a substrate. In this way, the depositing means may be arranged at, for example, an optimum and/or a predetermined distance from and/or an optimum and/or predetermined to a substrate. In this way, the depositing means may be arranged to deliver the powder to, for example, a position on the component, a plurality of positions on the component. For example, the depositing means may translate in one, two or three orthogonal dimensions and/or rotate about one, two or three orthogonal axes. In this way, the surface layer of the alloy may be provided on the component by depositing the powders at a plurality of positions. Additionally and/or alternatively, the component may be repositioned in use. For example, the apparatus may include a moving bed for the component. The moving bed may be repositioned in use, in which the moving bed may translate in one, two or three orthogonal dimensions and/or rotate about one, two or three orthogonal axes.

The depositing means may be arranged to deposit the metal nitride powder and/or the metal powder at a rate of at least 1 g/minute, at least 2 g/minute, at least 5 g/minute, at least 10 g/minute or at least 15 g/minute. The depositing means may be arranged to deposit the metal nitride powder and/or the metal powder at a rate of at most 2 g/minute, at most 5 g/minute, at most 10 g/minute, at most 15 g/minute, at most 20 g/minute, at most 25 g/minute, at most 30 g/minute, at most 40 g/minute, at most 50 g/minute or at most 100 g/minute.

In one example, the melting means and/or the controlled cooling means comprises at least one selected from a laser, an induction heater, a plasma heater and an electron beam heater.

The laser may be a CO₂ laser, a neodymium (Nd) laser and/or a neodymium yttrium-aluminium-garnet (Nd-YAG) laser.

In one example, the melting means comprises a laser, arranged to deliver a laser pulse to the metal nitride and/or the metal powder, thereby melting and fusing the powders. In one example, the laser is arranged to deliver a laser pulse wherein the laser pulse comprises a laser pulse length selected from a group comprising: a range 1 x 10⁻³ - 100 x 10⁻³ s, a range 5 x 10⁻³ - 10 x 10⁻³ s, 5 x 10⁻³ s, 7.5 x 10⁻³ s and 10 x 10⁻³ s. In one example, the laser is arranged to deliver a laser pulse wherein the laser pulse comprises a laser pulse energy one selected from a group comprising: a range 1 - 100 J, a range 10 - 20 J, 10 J, 15 J and 20 J. In one example, the laser is arranged to deliver a plurality of laser pulses. In one example, the laser is arranged to deliver a plurality of laser pulses, wherein a frequency of the plurality of laser pulses is one selected from a group comprising: a range 1 - 100 Hz, a range 15 - 22 Hz, 15 Hz, 18.5 Hz and 22 Hz.

In one example, the controlled cooling means comprises a laser. In one example, the laser is arranged to deliver a laser pulse wherein the laser pulse comprises a laser pulse length selected from a group comprising: a range 1 x 10⁻³ - 100 x 10⁻³ s, a range 5 x 10⁻³ - 10 x 10⁻³ s, 5 x 10⁻³ s, 7.5 x 10⁻³ s and 10 x 10⁻³ s. In one example, the laser is arranged to deliver a laser pulse wherein the laser pulse comprises a laser pulse energy selected from a group comprising: a range 1 - 100 J, a range 1 - 10 J, 2J and 5 J. In one example, the laser is arranged to deliver a plurality of laser pulses. In one example, the laser is arranged to deliver a plurality of laser pulses, wherein a frequency of the plurality of laser pulses is selected from a group comprising: a range 1 - 100 Hz, a range 15 - 22 Hz, 15 Hz, 18.5 Hz and 22 Hz.

In one example, the melting means comprises a first laser, as described above, and the controlled cooling means comprises a second laser, as described above. The first laser may be arranged to deliver more power than the second laser and/or at a higher power density. In this way, cooling of part of the solidified surface layer may be provided by the second laser while another part of the surface layer is being formed by melting powders using the first laser, for example simultaneously. In this way, laser melting and laser cladding are implemented together.

In one example, the melting means is an induction heater, for example for heating a surface region of the component. The induction heater may comprise induction coils arranged to encircle the component. AC current travels through the coils at a predetermined frequency and at a predetermined current density. An amount of heating and a temperature at the surface region is related to the current density and the frequency of current in the coils. For example to generate a high temperature which is sufficient to generate a temperature high enough to melt the metal powder, the current density in the induction coils would need to be increased and the frequency could also be increased. The temperature increase at the surface region of the component typically increases linearly when the frequency is increased from 1 KHz to around 1,000 KHz. However, induction heating normally has a skin depth or a depth to which heating dominates and this depth is inversely related to the frequency. Hence, a thickness of the surface layer formable reduces as the frequency increases. Metal powders containing iron and molybdenum can be made to impact the surface and form a stainless steel layer which can be melted by the induction system. Similarly a rate of cooling of the induction heater can be controlled so that rapid cooling is not attained by a programming a frequency cycle or current cycle to closely control the temperature of the component.

In an example, the apparatus comprises an enclosure arranged to enclose the component during at least melting the metal powder and the metal nitride powder deposited on the part of surface of the component by the melting means. In use, the enclosure is arranged to comprise a gas, wherein the gas comprises one selected from a group comprising: a shield gas, a reactive gas, carbon dioxide, an inert gas and argon. In this way, reaction or oxidation of the metal powder and the metal nitride powder deposited on the part of surface of the component during melting may be controlled and/or reduced and/or minimized. For example, the apparatus may comprise the enclosure arranged to isolate the apparatus from an external environment, in which the enclosure comprises a shielding gas, thereby controlling gaseous conditions of melting of the metal powder and the metal nitride powder deposited on the part of surface of the component. The depositing the metal nitride powder and a metal powder on at least a part of a surface of the component by the depositing means and/or the controlled cooling of the surface layer by the controlled cooling means may also be provided in the enclosure.

According to the fifth aspect, there is provided a method of improving pitting corrosion resistance and/or water droplet erosion (WDE) resistance of an iron-based alloy, the method comprising increasing the content of tungsten and nitrogen, in the iron-based alloy to the following amounts by weight % of the iron-based alloy:
- 1% to 6% tungsten
- 1% to 2% nitrogen.

The iron-based alloy may be according to the first aspect.
According to a sixth aspect, there is provided use of an iron-based alloy according to the first aspect on a surface of a component to improve corrosion pitting resistance and/or water droplet erosion (WDE) resistance thereof.

### Brief description of the drawings

For a better understanding of the invention, and to show how exemplary embodiments of the same may be brought into effect, reference will be made, by way of example only, to the accompanying diagrammatic Figures, in which:
Figure 1 schematically depicts a component according to an exemplary embodiment of the invention;
Figure 2 schematically depicts an apparatus according to an exemplary embodiment of the invention;
Figure 3 schematically depicts another apparatus according to an exemplary embodiment of the invention; and
Figure 4 schematically depicts a method according to an exemplary embodiment of the invention.

### Detailed Description of the Drawings

Generally, like reference signs denote like features, description of which is not repeated for brevity.

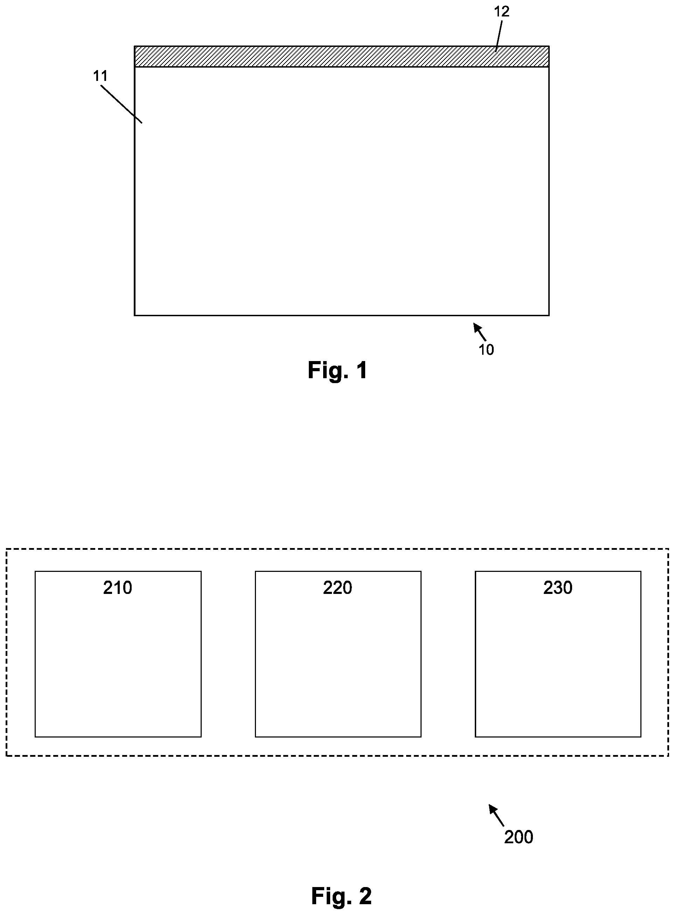

Figure 1 schematically depicts a component 10 according to an exemplary embodiment of the invention. Particularly, the component 10 comprises a main body 11 having a first iron-based alloy composition and a surface layer 12 having a second iron-based alloy composition, wherein the surface layer 12 is arranged on a surface region of the main body 11, wherein the second iron-based alloy composition is enriched, compared with the first iron-based alloy composition, with tungsten and nitrogen.

In this way, pitting corrosion resistance and/or improved WDE resistance of the component 10 is improved.

Figure 2 schematically depicts an apparatus 200 according to an exemplary embodiment of the invention.

Particularly, the apparatus 200 is for providing a surface layer of an iron-based alloy onto a component. The apparatus 200 comprises depositing means 210 for depositing a metal nitride powder and a metal powder on at least a part of a surface of the component. The apparatus 200 comprises melting means 220 for melting the metal nitride powder and the metal powder deposited on the part of the surface of the component. The apparatus 200 comprises controlled cooling 230 means for controlling cooling of the surface layer.

In this way, the surface layer of the iron-based alloy may be provided on the part of the surface of the component in which melting and cladding are implemented together, thereby reducing a cost and/or complexity while improving control of the properties of the surface layer, for example, adhesion of the surface layer to the component and/or mechanical properties of the surface layer, such as tensile strength.

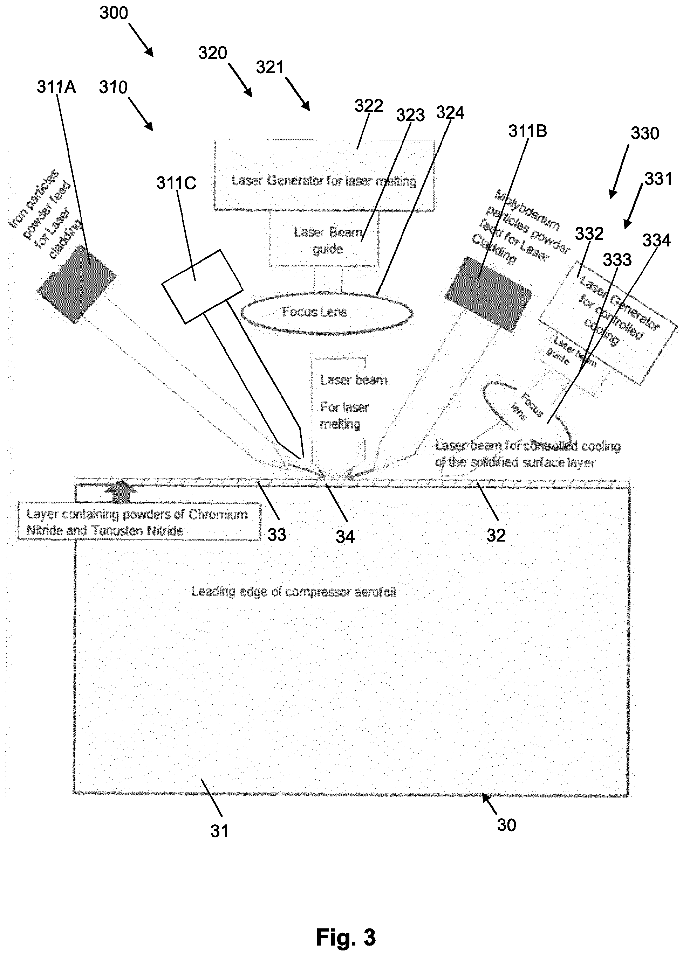

Figure 3 schematically depicts another apparatus 300 according to an exemplary embodiment of the invention.

Particularly, the apparatus 300 is for providing a surface layer 32 of an iron-based alloy onto a component 30. The apparatus 300 comprises depositing means 310 for depositing a metal nitride powder 33 and a metal powder 34 on at least a part of a surface of the component 30. The apparatus 300 comprises melting means 320 for melting the metal nitride powder 33 and the metal powder 34 deposited on the part of the surface of the component 30. The apparatus 300 comprises controlled cooling 330 means for controlling cooling of the surface layer 32.

In this way, the surface layer 32 of the iron-based alloy may be provided on the part of the surface of the component 30 in which melting and cladding are implemented together, thereby reducing a cost and/or complexity while improving control of the properties of the surface layer, for example, adhesion of the surface layer to the component and/or mechanical properties of the surface layer, such as tensile strength.

In this example, the surface layer 32 is provided on a leading edge of a compressor blade 31 formed from 17-4PH stainless steel having a composition in wt.% of Fe - 0.07 (max) C - 1.00 (max) Mn- 0.040 (max) P- 0.030 (max) S - 1.00 (max) Si - 15.00 to 17.50 Cr - 3.00 to 5.00 Ni - 3.00 to 5.00 Cu and 0.15 to 0.45 (Nb + Ta). As described previously, the leading edge of the compressor blade 31 formed from 17-4PH stainless steel is susceptible to pitting corrosion resistance and/or WDE. By providing the surface layer 32 of the alloy according to the first aspect on the leading edge of the compressor blade 31, the pitting corrosion resistance and/or WDE resistance of the leading edge of the compressor blade 31 and hence of the component 30 is improved, thereby improving a lifetime of the compressor blade 31 and hence of the component 30. Further, since the surface layer 32 of the alloy according to the first aspect is provided only on the leading edge of the compressor blade 31, a density of the component 30 is not significantly increased and hence potential vibrational issues are avoided. Additionally, since the surface layer 32 of the alloy according to the first aspect is provided only on the leading edge of the compressor blade 31, a cost of the component 30 may be reduced. Furthermore, since the composition of the compressor blade 31 is unchanged, new manufacturing processes and/or new qualification may not be required for the compressor blade 31. Additionally, the surface layer 32 of the alloy according to the first aspect may be provided on existing compressor blades, such as part of a refurbishment, thereby extending lifetimes of the compressor blades.

In this example, the depositing means 310 comprises a plurality of depositing heads 311A, 311B and 311C arranged to deposit iron, molybdenum and copper respectively, as described previously. Nickel and other alloying additions may be deposited similarly.

In this example, the melting means 320 comprises a first laser 321, including a laser generator 322 (also known as a laser power supply), a laser beam guide 323 and a focus lens 324. In this example, the controlled cooling means 330 comprises a second laser 331, including a laser generator 332 (also known as a laser power supply), a laser beam guide 333 and a focus lens 334.

The first laser 321 is arranged to deliver more power than the second laser 322 and/or at a higher power density. In this way, cooling of part of the solidified surface layer 32 may be provided by the second laser 322 while another part of the surface layer 32 is being formed by melting powders using the first laser 321, for example simultaneously. In this way, laser melting and laser cladding are implemented together.

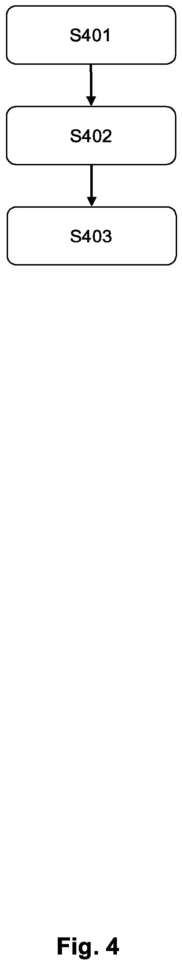

Figure 4 schematically depicts a method according to an exemplary embodiment of the invention. The method is of providing a surface layer of an iron-based alloy on a component.

At S401, a metal nitride powder and a metal powder are deposited on at least a part of a surface of the component, wherein the metal powder comprises one or more of chromium, molybdenum, tungsten, copper and iron.

At S402, the metal powder and the metal nitride powder deposited on the part of surface of the component are melted.

At S403, cooling of the surface layer is controlled.

The method may include any of the steps described previously.

Although a preferred embodiment has been shown and described, it will be appreciated by those skilled in the art that various changes and modifications might be made without departing from the scope of the invention, as defined in the appended claims and as described above.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at least some of such features and/or steps are mutually exclusive.

Each feature disclosed in this specification (including any accompanying claims, and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

## Claims

1. An iron-based alloy comprising tungsten and nitrogen in the following amounts by weight % of the iron-based alloy:
• 1% to 6% tungsten
• 1% to 2% nitrogen.

2. The iron-based alloy according to claim 1, comprising any one or more of chromium, molybdenum and copper in the following amounts by weight % of the alloy:
• 15% to 20% chromium
• 3% to 8% molybdenum
• 2% to 6% copper.

3. The iron-based alloy according to any previous claim, comprising nickel in the following amount by weight % of the iron-based alloy:
• 10% to 15% nickel.

4. A component comprising a main body having a first iron-based alloy composition and a surface layer having a second iron-based alloy composition, wherein the surface layer is arranged on a surface region of the main body, wherein the second iron-based alloy composition is enriched, compared with the first iron-based alloy composition, with tungsten and nitrogen.

5. The component according to claim 4, wherein the second iron-based alloy comprises tungsten and nitrogen in the following amounts by weight % of the second iron-based alloy:
• 1% to 6% tungsten
• 1% to 2% nitrogen.

6. The component according to any one of claims 4 to 5, wherein the second iron-based alloy comprises any one or more of chromium, molybdenum and copper in the following amounts by weight % of the second iron-based alloy:
• 15% to 20% chromium
• 3% to 8% molybdenum
• 2% to 6% copper.

7. The component according to any one of claims 4 to 6, wherein the second iron-based alloy is an iron-based alloy according to any of claims 1 to 3.

8. The component according to any one of claims 4 to 7, wherein the component is a compressor blade and the surface layer is arranged on at least a part of a leading edge of the compressor blade.

9. A method of providing a surface layer of an iron-based alloy on a component, the method comprising the steps of:
a) depositing a metal nitride powder and a metal powder on at least a part of a surface of the component, wherein the metal powder comprises one or more of chromium, molybdenum, tungsten, copper and iron;
b) melting the metal powder and the metal nitride powder deposited on the part of surface of the component; and
c) controlling cooling of the surface layer.

10. The method according to claim 9, wherein the step of controlling cooling of the surface layer comprises heating at least a part of the solidified surface layer, thereby limiting a rate of cooling of the part of the solidified surface layer.

11. The method according to any one of claims 9 to 10, comprising providing a concavity in the surface of the component and wherein the metal nitride powder and the metal powder are deposited in the concavity.

12. An apparatus for providing a surface layer of an iron-based alloy onto a component, the apparatus comprising:
depositing means for depositing a metal nitride powder and a metal powder on at least a part of a surface of the component;
melting means for melting the metal nitride powder and the metal powder deposited on the part of the surface of the component; and
controlled cooling means for controlling cooling of the surface layer.

13. A method of improving pitting corrosion resistance and/or water droplet erosion (WDE) resistance of an iron-based alloy, the method comprising increasing the content of tungsten and nitrogen, in the iron-based alloy to the following amounts by weight % of the iron-based alloy:
• 1% to 6% tungsten
• 1% to 2% nitrogen.

14. The method according to claim 13, comprising increasing the content of any one or more of chromium, molybdenum and copper to the following amounts by weight % of the alloy:
• 15% to 20% chromium
• 3% to 8% molybdenum
• 2% to 6% copper.

15. The method according to any of claims 13 to 14, comprising increasing the content of nickel to the following amount by weight % of the iron-based alloy:
• 10% to 15% nickel.

16. Use of an iron-based alloy according to any one of claims 1 to 3 on a surface of a component to improve corrosion pitting resistance and/or water droplet erosion (WDE) resistance thereof.
